# EUROPÄISCHE PATENTSCHRIFT

(11) **EP 3 882 517 B1**
(45) Veröffentlichungstag und Bekanntmachung des Hinweises auf die Patenterteilung: **03.08.2022**
(21) Anmeldenummer: 21162492.9
(22) Anmeldetag: 15.03.2021
(51) Int. Cl.: F21V 8/00

(54) **LED-LEUCHTE**
LED LIGHT
LUMINAIRE À DEL

(30) Priorität: 20.03.2020 AT 5006520 U
(43) Veröffentlichungstag der Anmeldung: 22.09.2021
(73) Patentinhaber: Zumtobel Lighting GmbH, 6850 Dornbirn (AT)
(72) Erfinder: LUDWICZAK-OSTERLOHER, Bogna, 6850 Dornbirn (AT)
(74) Vertreter: Thun, Clemens

(56) Entgegenhaltungen:
- DE-A1-102012 019 522
- FR-A1- 2 993 345
- JP-A- 2001 229 703
- US-A- 4 929 866
- US-A1- 2012 063 164

## Beschreibung

Die vorliegende Erfindung betrifft eine LED-Leuchte mit mehreren, in einer Ebene angeordneten LEDs und einem Lichtleiter. Insbesondere ist die erfindungsgemäße Leuchte dazu vorgesehen, Licht mit einer stark asymmetrischen Lichtverteilung abzugeben.

Stark asymmetrische Lichtverteilungen werden oft in atypischen Beleuchtungssituationen verwendet, beispielsweise dann, wenn mit einer Wandleuchte ein Raum insgesamt möglichst blendfrei ausgeleuchtet werden soll. In derartigen Fällen ist es vorteilhaft, das Licht möglichst tief in den Raum zu bringen. Dabei sind Überhellungen an der Decke und an der Wand, die vor allem in der Nähe der Leuchte entstehen können, zu vermeiden. Für solche extremen Lichtumlenkungen werden optische Systeme benötigt, die entweder relativ viel Einbauraum benötigen und dementsprechend groß ausgeführt sind, oder - wenn der Raum nicht verfügbar bzw. nur begrenzt ist - eine komplizierte Geometrie aufweisen.

Aus dem Stand der Technik sind LED-Leuchten bekannt, die Linsen aufweisen, mit deren Hilfe eine stark asymmetrische Lichtverteilung erzielt wird. Derartige Linsen weisen oft eine sehr komplizierte Geometrie auf, was zu Problemen hinsichtlich der akzeptablen Fertigungstoleranzen sowie der Positionierung in Bezug auf die zugehörige LED-Lichtquelle führt. Besonders im Fall von in der Beleuchtungstechnik gerne eingesetzten Extrusions-Linsen stellen allerdings Fertigungstoleranzen ein Problem dar. Sie führen zu Ungenauigkeiten und sogenannten Farbshifts in der Lichtverteilung. Generell stellt sich das Problem dar, dass je kleiner der für die Optik zur Verfügung stehende Raum ist, desto schwieriger die entsprechenden Fertigungstoleranzen eingehalten werden können.

Die DE 10 2012 019522 A1 beschreibt eine Leuchtenanordnung mit mehreren Lichtquellen, welche von der Seite in einen Lichtleiter einstrahlen, wobei der Lichtleiter eine reflektierende Schicht aufweist, sodass das Licht in beide Richtungen senkrecht zur Einstrahlrichtung abgegeben wird. Des Weiteren weißt die Anordnung ein Gehäuse auf, welches die Lichtquellen und den Lichtleiter umgibt.

Die US 2012/063164 A1 betrifft eine Leuchte, aufweisend einen Lichtleiter, dessen Flächen keilförmig zu einer Seite hin derart zusammenlaufen, dass sich eine spitze Kante ergibt. Auf der der Kante gegenüberliegenden Seite strahlen LEDs Licht in den Lichtleiter ein, wobei auf der Unterseite des Lichtleiters eine Reflexionsschicht angeordnet ist, sodass das Licht über die der Reflexionsseite gegenüberliegende Seite des Lichtleiters abgegeben wird.

Die US 4 929 866 A offenbart eine Leuchte aufweisend ein Gehäuse mit einem Fenster, wobei LEDs in dem Gehäuse im Bereich des Randes des Fensters angeordnet sind und ein Reflektor derart angeordnet ist, dass das von den LEDs abgegebene Licht über das Fenster aus dem Gehäuse abgegeben wird.

Die FR 2 993 345 A1 beschreibt eine Leuchte, welche einen gekrümmten Lichtleiter aufweist, in welchen auf einer Seite Licht einer Lichtquelle eingekoppelt wird und auf der der Einkoppelseite gegenüberliegenden Seite des Lichtleiters mittels einer Reflexionsschicht wieder ausgekoppelt wird und somit eine Beleuchtung beispielsweise einer Wand, an welcher die Leuchte montiert ist, ermöglicht.

Der vorliegenden Erfindung liegt die Aufgabe zugrunde, eine im Hinblick auf die oben genannten Problemstellungen verbesserte Leuchte bereitzustellen. Insbesondere soll die Leuchte sich dazu eignen, Licht mit einer stark asymmetrischen Lichtverteilung abzugeben. Gleichzeitig soll die Leuchte derart gestaltet sein, dass sie eine möglichst kompakte Bauform aufweist.

Die Aufgabe wird gemäß der vorliegenden Erfindung mit dem in dem unabhängigen Anspruch genannten Gegenstand gelöst. Vorteilhafte Weiterbildungen der Erfindung sind Gegenstand der abhängigen Ansprüche.

Gemäß der vorliegenden Erfindung ist eine Leuchte vorgesehen, aufweisend
- eine LED-Lichtquelle mit mehreren, in einer Ebene angeordneten LEDs zur Abstrahlung eines ersten Lichts,
- ein Rahmenelement zur Halterung der LED-Lichtquelle, wobei das Rahmenelement einen ersten Randbereich sowie einen dem ersten Randbereich gegenüberliegenden zweiten Randbereich aufweist, der die LED-Lichtquelle haltend gestaltet ist,
- ein Reflektor-Element, welches sich zwischen dem ersten Randbereich und dem zweiten Randbereich des Rahmenelements erstreckt, sowie
- einen Lichtleiter, der über dem Reflektor-Element angeordnet ist und sich - in einem Querschnitt senkrecht zu der Ebene der LEDs betrachtet - ausgehend von dem ersten Randbereich zu der LED-Lichtquelle hin erstreckt, derart, dass das erste Licht durch eine der LED-Lichtquelle zugewandte stirnseitige Endfläche des Lichtleiters in diesen einstrahlt und im Weiteren zumindest teilweise den Lichtleiter in entgegengesetzter Richtung zu dem Reflektor-Element verlässt und nach außen abgegeben wird, wobei der Lichtleiter in einem an den ersten Randbereich angrenzenden Bereich eine sich plan in einer zweiten Ebene erstreckende Lichtabstrahlfläche aufweist und die erste und zweite Ebene einen Winkel kleiner als 90° einschließen, vorzugsweise einen Winkel zwischen 60° und 80°, besonders bevorzugt etwa 70°, wobei der Lichtleiter in einem der LED-Lichtquelle (1) zugewandten Bereich gewölbt bzw. gekrümmt ausgeführt ist, so dass eine der LED-Lichtquelle zugewandte Lichteintrittsfläche des Lichtleiters parallel zur ersten Ebene verläuft.

Die Ausgestaltung der erfindungsgemäßen Leuchte erlaubt es, die Optik zu Beeinflussung der Lichtabgabe möglichst kompakt zu gestalten, so dass eine kleinbauende Leuchte realisiert werden kann. Trotz allem wird in gewünschter Weise asymmetrisch Licht abgegeben, so dass sich die Leuchte für den eingangs geschilderten Anwendungszweck als Wandleuchte, mit deren Hilfe ein Raum möglichst vollständig ausgeleuchtet werden soll, gut eignet.

Das Rahmenelement der erfindungsgemäßen Leuchte kann hierbei zur Befestigung der Leuchte an einer Wand mittels einer Befestigungsebene ausgelegt sein, wobei das Rahmenelement vorzugsweise in erster Näherung Pyramidenstumpf-artig geformt gestaltet ist. Insbesondere kann hierbei vorgesehen sein, dass die erste Ebene, welche durch die Anordnung der LEDs definiert ist, gegenüber der Befestigungsebene der Leuchte geneigt ist, vorzugsweise in einem Winkel von etwa 20°. Wird die Leuchte wie vorgesehen also an einer Wand bzw. einer vertikalen Montagefläche angeordnet, so sind die LEDs leicht nach oben geneigt ausgerichtet, wodurch die angestrebte asymmetrische Lichtabgabe weiter optimiert werden kann.

Erfindungsgemäß weist hierbei der Lichtleiter in einem an den ersten Randbereich angrenzenden Bereich eine sich plan in einer zweiten Ebene erstreckende Lichtabstrahlfläche auf, wobei die erste und zweite Ebene einen Winkel kleiner als 90° einschließen. Vorzugsweise kann dieser Winkel im Bereich zwischen 60° und 80° liegen, besonders bevorzugt im Bereich von etwa 70°. Insbesondere kann hierbei vorgesehen sein, dass die zweite Ebene für den Fall, dass die Leuchte an einer vertikalen Wand angeordnet ist, sich im Wesentlichen horizontal erstreckt.

Der Lichtleiter ist erfindungsgemäß hierbei in einem der LED-Lichtquelle zugewandten Bereich gewölbt bzw. gekrümmt ausgeführt sein, so dass eine der LED-Lichtquelle zugewandte Lichteintrittsfläche des Lichtleiters parallel zur ersten Ebene verläuft. Hierdurch wird einerseits die Lichteinkopplung der LEDs in den Lichtleiter optimiert, andererseits trägt diese spezielle Ausgestaltung dazu bei, dass die Optik besonders kompakt gehalten werden kann.

Der Lichtleiter kann dabei ausgehend von dem ersten Randbereich zu dem zweiten Randbereich hin eine zunehmende Dicke, vorzugsweise eine kontinuierlich zunehmende Dicke aufweisen. Insbesondere kann vorgesehen sein, dass die Dicke des Lichtleiters im Lichteintrittsbereich etwa viermal so groß ist wie am gegenüberliegenden Ende.

Der Lichtleiter weist hierbei vorzugsweise an seiner dem Reflektor abgewandten Seite Lichtauskoppelstrukturen auf, die derart gestaltet sind, dass das erste Licht zumindest teilweise den Lichtleiter über die plane Lichtabstrahlfläche verlässt.

Die erfindungsgemäße Ausgestaltung der Leuchte erlaubt es, wie bereits erwähnt, eine Lichtabgabe mit einer asymmetrischen Lichtverteilung zu erzielen, wobei vorzugsweise diese Lichtabgabe in der entgegengesetzten Richtung zu der Befestigungsebene der Leuchte vorliegt, und wobei insbesondere der Abstrahlwinkel, bezogen auf die Befestigungsebene, etwa 135° beträgt.

Die erfindungsgemäße Lösung zeichnet sich insbesondere durch die einfache Geometrie des Lichtleiters aus und ermöglicht die Nutzung große Radien, durch die Verlustlicht vermieden wird. Die Fertigungstoleranzen sind bei der erfindungsgemäßen Ausgestaltung in einem Extrusionsprozess einfach zu bewältigen. Darüber hinaus ist der benötigte Bauraum sehr klein und die generierte Lichtverteilung erreicht die gewünschte Asymmetrie, um das abgestrahlte Licht der Leuchte in die Raumtiefe zu bringen.

Die Erfindung wird im Folgenden anhand eines Ausführungsbeispiels und mit Bezug auf die Zeichnungen näher erläutert. Es zeigen:
- Fig. 1: eine Querschnitt-Skizze einer erfindungsgemäßen Leuchte;
- Fig. 2: die Verteilung des abgestrahlten Lichts der Leuchte gemäß Fig. 1 und
- Fig. 3: eine Leuchte gemäß dem Stand der Technik.

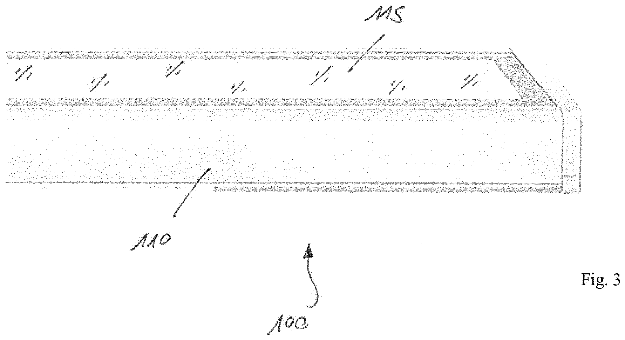

Bevor die erfindungsgemäße Ausgestaltung der Leuchte im Detail erläutert wird, soll zunächst die der Erfindung zugrundeliegende Aufgabenstellung näher erläutert werden. Hierzu ist in Fig. 3 eine aus dem Stand der Technik bekannte Leuchte gezeigt, die in gleicher Weise wie auch die erfindungsgemäße Leuchte als Wandleuchte zum Einsatz kommt und dazu vorgesehen ist, möglichst tief in einen Raum hinein Licht abzustrahlen.

Die in Fig. 3 gezeigte Leuchte 100 weist somit eine längliche, etwa quaderförmige Form auf und ist mit ihrer Rückseite an einer nicht dargestellten Wand oder generell vertikalen Montagefläche befestigt. Die Lichtabgabe erfolgt über eine an der Oberseite des Gehäuses 110 ausgebildete Lichtabstrahlfläche 115, so dass das Licht im Sinne einer Indirektbeleuchtung auf eine Decke des Raums, in dem die Leuchte 100 angeordnet ist, abgegeben wird. Um eine möglichst gleichmäßige Beleuchtung erhalten zu können, muss hierbei eine möglichst stark asymmetrische Lichtabgabe schräg nach vorne hin, also in den Raum hinein erfolgen, was durch die entsprechende Anordnung der Leuchtmittel sowie Ausgestaltung der zugehörigen Optik erreicht wird.

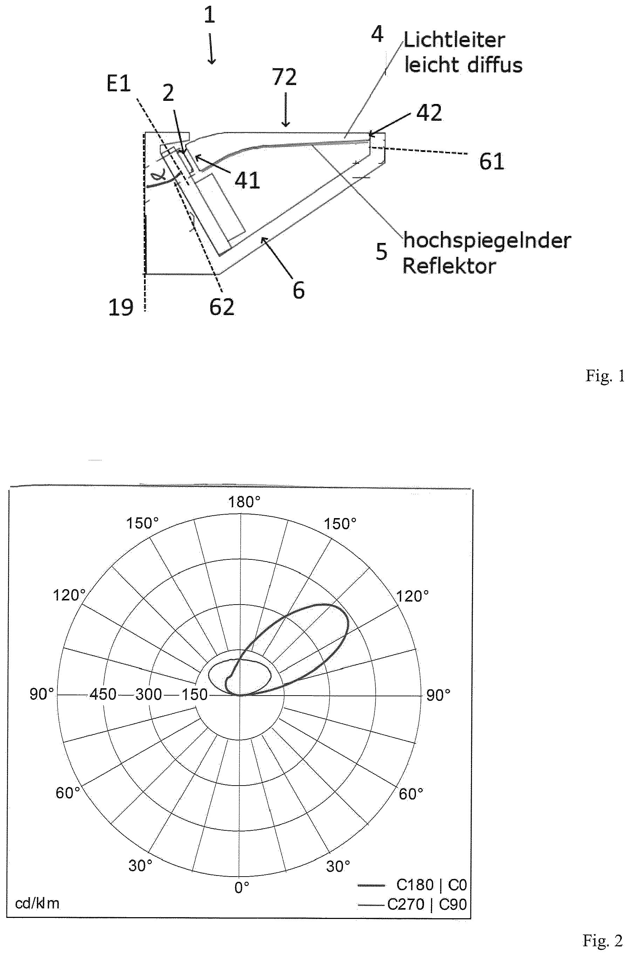

Mit Hilfe der vorliegenden Erfindung wird eine Lösung zur Verfügung gestellt, welche es erlaubt, trotz einer äußerst kompakten Ausgestaltung der Optik und ihrem einfachen Aufbau die gewünschte stark asymmetrische Lichtabgabe zu erzielen. Diese Lösung soll nunmehr mit Bezug auf die Fig. 1 und 2 näher erläutert werden.

Fig. 1 zeigt hierzu eine Skizze der erfindungsgemäßen Leuchte in einer Querschnittansicht. In der nachfolgenden Beschreibung wird von der dargestellten Orientierung der Leuchte gegenüber der Vertikalen ausgegangen. Allerdings kann die Leuchte grundsätzlich zum Betrieb auch in einer anderen Orientierung verwendet werden.

Die Leuchte weist also eine LED-Lichtquelle 1 mit mehreren, in einer Ebene E1 angeordneten LEDs 2 zur Abstrahlung eines ersten Lichts auf. Weiterhin weist sie ein Rahmenelement 6 auf, welches vorzugsweise zur Befestigung der Leuchte an einer Wand mittels einer Befestigungsebene 19 ausgelegt ist und das vorzugsweise in erster Näherung Pyramidenstumpf-artig geformt gestaltet ist, wobei das Rahmenelement 6 einen ersten Randbereich 61 aufweist, der an die Grundfläche der entsprechenden Pyramidenstumpfform angrenzt und der Befestigungsebene 19 gegenüberliegt, sowie einen hierzu gegenüberliegenden zweiten Randbereich 62, der die LED-Lichtquelle 1 haltend gestaltet ist. Ein Reflektor-Element 5, welches auf dem Rahmenelement 6 angeordnet ist, erstreckt sich hierbei zwischen dem zweiten Randbereich 62 und dem ersten Randbereich 61. Die Ebene E1 in der die LEDs 2 angeordnet sind, ist vorzugsweise schräg zur Befestigungsebene 19 ausgerichtet, bevorzugt in einem Winkel α von etwa 20°. Damit sind die LEDs 2, die in der Ebene E1 entweder in einer Reihe oder matrixartig angeordnet sein können, leicht nach oben geneigt ausgerichtet.

Ein Lichtleiter 4 ist über dem Reflektor-Element angeordnet und erstreckt sich - in einem Querschnitt senkrecht zu der ersten Ebene E1 betrachtet - ausgehend von dem ersten Randbereich 61 einwärts zu der LED-Lichtquelle 1 hin, derart, dass das von den LEDs 2 abgegebene erste Licht durch eine der LED-Lichtquelle 1 zugewandte stirnseitige erste Endfläche 41 des Lichtleiters 4 in diesen einstrahlt und im Weiteren zumindest teilweise den Lichtleiter 4 in entgegengesetzter Richtung zu dem Reflektor-Element 5 verlässt und somit nach außen abgegeben wird. Der Lichtleiter 4 endet im Bereich des ersten Randbereichs 61 mit der zweiten Stirnfläche 42.

Der Lichtleiter 4 ist entsprechend der Darstellung von Fig. 1 sich zur LED-Lichtquelle 1 hin vorwölbend bzw. gekrümmt geformt, derart, dass die stirnseitige erste Endfläche 41 möglichst parallel zur Ebene E1 der Anordnung der LEDs 2 ausgerichtet ist. Hierdurch ist sichergestellt, dass das von den LEDs 2 abgegebene Licht möglichst effizient in den Lichtleiter 4 eingekoppelt wird.

Der Lichtleiter 4 erstreckt sich hierbei im Bereich zu der zweiten Stirnfläche 42 bzw. dem ersten Endbereich 61 des Rahmenelements 6 hin vorzugsweise plan, so dass in diesem Bereich eine plane Lichtabstrahlfläche 72 gebildet wird. Insbesondere ist hierbei die Krümmung des Lichtleiters derart ausgeführt, dass bei der in Fig. 1 dargestellten Anordnung der Leuchte an einer Wand, also bei vertikal verlaufender Befestigungsebene 19, die Lichtabstrahlfläche 72 im Wesentlichen horizontal ausgerichtet ist.

Der Lichtleiter 4 weist hierbei - nicht näher dargestellte - Lichtauskoppelstrukturen auf, die derart gestaltet sind, dass das erste Licht zumindest teilweise den Lichtleiter 4 über die plane Lichtabstrahlfläche 72 verlässt. Insbesondere können diese Lichtauskoppelstrukturen an der Lichtabstrahlfläche 72 ausgeführt sein. Auch innerhalb des Materials des Lichtleiters 4 vorgesehene Streupartikel können die Lichtauskopplung bewirken.

Wie ferner der Darstellung von Fig. 1 entnommen werden kann, ist der Lichtleiter 4 derart geformt, dass er sich - in dem dargestellten Querschnitt betrachtet - in Richtung zu der zweiten Stirnfläche 42 hin verjüngt. Insbesondere kann vorgesehen sein, dass die Dicke des Lichtleiters 4 im Bereich der Lichteintrittsfläche 41 in etwa viermal so groß ist wie im Bereich der zweiten Stirnfläche 42. Insbesondere liegt vorzugsweise eine kontinuierliche, stetige Verjüngung des Lichtleiters 4 vor.

Der Lichtleiter 4 besteht vorzugsweise aus einem leicht streuendem, ansonsten allerdings klaren Kunststoff, wobei hierbei insbesondere an PMMA, PC oder Silikon zu denken ist. Unterhalb des Lichtleiters 4 befindet sich wie bereits erwähnt der Reflektor 5, der vorzugsweise hochverspiegelt ausgeführt ist und entweder als separates Bauelement an der Unterseite des Lichtleiters 4 angeordnet sein kann oder durch eine entsprechende reflektierende Beschichtung des Lichtleiters 4 realisiert wird. In beiden Fällen folgt hierbei der Reflektor 5 der Krümmung des Lichtleiters 4.

Die angestrebte Licht-Auskopplung aus dem Lichtleiter 4 wird durch
- die Form des Lichtleiters (d. h. den Grad der Verjüngung und den Biegeradius des Lichtleiters)
- Streupartikel im Material des Lichtleiters
- den Reflektor unterhalb des Lichtleiters
bewirkt. Diese genannten Faktoren beeinflussen stark die Lichtverteilung der erfindungsgemäßen Leuchte, tragen grundsätzlich allerdings dazu bei, dass eine äußerst kompakte Ausgestaltung der Optik erzielt werden kann. Insbesondere kann beispielsweise mit Hilfe eines lediglich 32 mm breiten Lichtleiters 3 die in Fig. 2 dargestellte Lichtverteilung erzielt werden.

Fig. 2 zeigt hierzu die Verteilung des abgestrahlten Lichts bei einer Leuchte entsprechend der vorliegenden Erfindung. Die Lichtabgabe bzw. die Lichtabstrahlung durch die Leuchte weist wie erwähnt eine asymmetrische Lichtverteilung auf, wobei die Lichtabgabe in der entgegengesetzten Richtung zu der Befestigungsebene 19 erfolgt, vorzugsweise in einem Abstrahlwinkel von etwa 135° bezogen auf die Befestigungsebene 19.

Je mehr Streupartikel in dem Lichtleitermaterial des Lichtleiters angeordnet sind, desto lambertischer wird die Lichtverteilung. Ein weißer Reflektor 5 erhöht ferner deutlich den Lichtanteil in dem hinteren Halbraum (C90 - C270). Je größer das Verhältnis zwischen der Lichteintrittsfläche 41 des Lichtleiters 4 und der Fläche des Lichtleiterendes 42 ist, desto höher der sogenannte LOR. Insbesondere hat sich herausgestellt, dass bei einem größeren entsprechenden Verhältnis eine vorteilhafte Ausleuchtung des Raumes erzielt werden kann. Beispielsweise wird bei einem Faktor 4 eine verhältnismäßig breite Lichtverteilung in der C90/C270-Ebene erzielt.

Die in Fig. 2 dargestellte Lichtverteilung entspricht einem eindiffusierten Lichtleiter mit einem Größenverhältnis 4:1 zwischen der ersten und zweiten stirnseitigen Endfläche 41 und 42 sowie einem hochspiegelnden Reflektor 5, wobei durch die oben genannten Punkte die Lichtabgabe in gewünschter Weise beeinflusst werden kann.

Die erfindungsgemäße Leuchte kann beispielsweise auch bei Möbeln Verwendung finden. Dies wird dadurch ermöglicht, dass die erfindungsgemäße Leuchte aufgrund ihrer kompakten Ausgestaltung eine Integration auch in Möbel erlaubt.

Ferner wäre es denkbar, die erfindungsgemäße Leuchte als Orientierungsleuchte oder sogenannte Pollerleuchte zu nutzen. In diesem Fall ist eine Drehung des optischen Systems um 180° erforderlich.

Die erfindungsgemäße Leuchte bietet aufgrund der Kombination von sich verjüngendem Lichtleiter, der erfindungsgemäßen Anordnung der LED-Leuchtmittel und dem Reflektor den Vorteil einer optimalen Wandbestrahlung bzw. eines sogenannten Ceiling Washing, wobei die gewünschte Lichtverteilung bei einem sehr kompakten Design erzielt wird. Insbesondere lässt sich also mit Hilfe der erfindungsgemäßen Leuchte besonders geeignet Licht asymmetrisch verteilt abgeben. Dabei kann die Leuchte mit äußerst kleinen Abmessungen gestaltet werden, wobei in Längsrichtung die Leuchte in verschiedenen Längen ausgeführt sein kann.

## Patentansprüche

1. Leuchte, aufweisend
- eine LED-Lichtquelle (1) mit mehreren, in einer Ebene (E1) angeordneten LEDs (2) zur Abstrahlung eines ersten Lichts,
- ein Rahmenelement (6) zur Halterung der LED-Lichtquelle (1), wobei das Rahmenelement (6) einen ersten Randbereich (61) sowie einen dem ersten Randbereich (61) gegenüberliegenden zweiten Randbereich (62) aufweist, der die LED-Lichtquelle (1) haltend gestaltet ist,
- ein Reflektor-Element (5), welches sich zwischen dem ersten Randbereich (61) und dem zweiten Randbereich (62) des Rahmenelements (6) erstreckt,
- einen Lichtleiter (4), der über dem Reflektor-Element (5) angeordnet ist und sich - in einem Querschnitt senkrecht zu der Ebene (E1) der LEDs (2) betrachtet
- ausgehend von dem ersten Randbereich (61) zu der LED-Lichtquelle (1) hin erstreckt, derart, dass das erste Licht durch eine, der LED-Lichtquelle (1) zugewandte stirnseitige Endfläche (41) des Lichtleiters (4) in diesen einstrahlt und im Weiteren zumindest teilweise den Lichtleiter (4) in entgegengesetzter Richtung zu dem Reflektor-Element (5) verlässt und nach außen abgegeben wird, wobei der Lichtleiter (4) in einem an den ersten Randbereich (61) angrenzenden Bereich eine sich plan in einer zweiten Ebene erstreckende Lichtabstrahlfläche aufweist **dadurch gekennzeichnet, dass** die erste und zweite Ebene einen Winkel kleiner als 90° einschließen, vorzugsweise einen Winkel zwischen 60° und 80°, besonders bevorzugt etwa 70°, wobei der Lichtleiter (4) in einem der LED-Lichtquelle (1) zugewandten Bereich gewölbt bzw. gekrümmt ausgeführt ist, so dass eine der LED-Lichtquelle (1) zugewandte Lichteintrittsfläche des Lichtleiters (4) parallel zur ersten Ebene (E1) verläuft.

2. Leuchte nach Anspruch 1,
**dadurch gekennzeichnet,**
**dass** das Rahmenelement (6) zur Befestigung der Leuchte an einer Wand mittels einer Befestigungsebene (19) ausgelegt ist, wobei das Rahmenelement (6) vorzugsweise in erster Näherung Pyramidenstumpf-artig geformt gestaltet ist.

3. Leuchte nach Anspruch 2,
**dadurch gekennzeichnet,**
**dass** die erste Ebene (E1) gegenüber der Befestigungsebene (19) geneigt ist, vorzugsweise in einem Winkel von etwa 20°.

4. Leuchte nach einem der vorherigen Ansprüche,
**dadurch gekennzeichnet,**
**dass** der Lichtleiter (4) Lichtauskoppelstrukturen aufweist, die derart gestaltet sind, dass das erste Licht zumindest teilweise den Lichtleiter (4) über die plane Abstrahlungsfläche verlässt.

5. Leuchte nach einem der vorherigen Ansprüche,
**dadurch gekennzeichnet,**
**dass** der Lichtleiter (4) ausgehend von dem ersten Randbereich (61) zu dem zweiten Randbereich (62) hin eine zunehmende Dicke, vorzugsweise eine kontinuierlich zunehmende Dicke aufweist.

6. Leuchte nach Anspruch 5,
**dadurch gekennzeichnet,**
**dass** die Dicke des Lichtleiters (4) im Bereich der Lichteintrittsfläche (41) etwa viermal so groß ist wie am gegenüberliegenden Endbereich (42).

7. Leuchte nach einem der vorhergehenden Ansprüche,
**dadurch gekennzeichnet,**
**dass** der Lichtleiter (4) aus einem Kunststoffmaterial, insbesondere aus PMMA oder PC, besteht,
wobei vorzugsweise in dem Lichtleiter (4) Streupartikel vorgesehen sind.

8. Leuchte nach einem der vorhergehenden Ansprüche,
**dadurch gekennzeichnet,**
**dass** die Lichtabgabe durch die Leuchte eine asymmetrische Lichtverteilung aufweist, wobei diese Lichtabgabe in der entgegengesetzten Richtung zu einer Befestigungsebene (19) der Leuchte abgestrahlt wird, vorzugsweise in einem Abstrahlwinkel von 135 Grad bezogen auf die Befestigungsebene (19).

## Claims

1. Lamp comprising
- an LED light source (1) comprising a plurality of LEDs (2) disposed in a plane (E1) for emitting a first light,
- a frame element (6) for holding the LED light source (1), wherein the frame element (6) comprises a first edge region (61) and a second edge region (62) which is opposite to the first edge region (61) and is designed to hold the LED light source (1),
- a reflector element (5) which extends between the first edge region (61) and the second edge region (62) of the frame element (6),
- a light guide (4) which is disposed above the reflector element (5) and, viewed in a cross-section perpendicular to the plane (E1) of the LEDs (2), extends from the first edge region (61) toward the LED light source (1), such that the first light enters the light guide through a front-side end face (41) of the light guide (4) which faces the LED light source (1) and then at least partially exits the light guide (4) in the opposite direction to the reflector element (5) and is emitted to the outside, wherein, in a region adjacent the first edge region (61), the light guide (4) comprises a light-emitting surface which extends flat in a second plane
**characterized in that**
the first and the second plane enclose an angle less than 90°, preferably an angle between 60° and 80°, particularly preferably about 70°, wherein the light guide (4) is domed or curved in a region facing the LED light source (1), so that a light entry surface of the light guide (4) facing the LED light source (1) extends parallel to the first plane (E1).

2. Lamp according to Claim 1,
**characterized in that**
the frame element (6) is configured for fastening the lamp to a wall by means of a fastening plane (19), wherein the frame element (6) is preferably shaped in a first approximation like a truncated pyramid.

3. Lamp according to Claim 2,
**characterized in that**
the first plane (E1) is inclined relative to the fastening plane (19), preferably at an angle of about 20°.

4. Lamp according to any one of the preceding claims,
**characterized in that**
the light guide (4) comprises light outcoupling structures which are designed such that the first light at least partially exits the light guide (4) via the flat emission surface.

5. Lamp according to any one of the preceding claims,
**characterized in that**
the light guide (4) has a thickness which increases from the first edge region (61) toward the second edge region (62), preferably a continuously increasing thickness.

6. Lamp according to Claim 5,
**characterized in that**
the thickness of the light guide (4) in the region of the light entry surface (41) is about four times greater than at the opposite end region (42).

7. Lamp according to any one of the preceding claims,
**characterized in that**
the light guide (4) is made of a plastic material, in particular PMMA or PC,
wherein scattering particles are preferably provided in the light guide (4).

8. Lamp according to any one of the preceding claims,
**characterized in that**
the light output by the lamp has an asymmetrical light distribution, wherein said light output is emitted in the opposite direction to a fastening plane (19) of the lamp, preferably at a beam angle of 135 degrees with respect to the fastening plane (19).

## Revendications

1. Luminaire, présentant
- une source lumineuse à LED (1) comprenant plusieurs LED (2) disposées dans un même plan (E1) et destinées à diffuser une première lumière,
- un élément formant cadre (6) destiné à supporter la source lumineuse à LED (1), ledit élément formant cadre (6) présentant une première zone de bord (61) ainsi qu'une deuxième zone de bord (62) opposée à la première zone de bord (61) et conçue pour supporter la source lumineuse à LED (1),
- un élément réflecteur (5) s'étendant entre la première zone de bord (61) et la deuxième zone de bord (62) de l'élément formant cadre (6),
- un guide de lumière (4) disposé au-dessus de l'élément réflecteur (5) et s'étendant - vu en coupe perpendiculairement au plan (E1) des LED (2) vers la source lumineuse à LED (1) en partant de la première zone de bord (61), de telle façon que la première lumière rayonne dans le guide de lumière (4) par une surface terminale frontale (41) du guide de lumière qui est tournée vers la source lumineuse à LED (1) avant de sortir au moins partiellement du guide de lumière (4) dans la direction opposée à l'élément réflecteur (5) et d'être émise vers l'extérieur, ledit guide de lumière (4) présentant, dans une zone adjacente à la première zone de bord (61), une surface plane de rayonnement lumineux s'étendant dans un deuxième plan,
**caractérisé en ce que**
le premier et le deuxième plan forment un angle inférieur à 90°, de préférence compris entre 60° et 80° et plus préférablement d'environ 70°, ledit guide de lumière (4) étant de configuration bombée ou incurvée dans une zone tournée vers la source lumineuse à LED (1), de telle façon qu'une surface d'entrée de lumière du guide de lumière (4) qui est tournée vers la source lumineuse à LED (1) est parallèle au premier plan (E1) .

2. Luminaire selon la revendication 1,
**caractérisé en ce que**
l'élément formant cadre (6) est conçu pour permettre une fixation murale du luminaire par l'intermédiaire d'un plan de fixation (19), ledit élément formant cadre (6) étant conçu, de préférence en première approximation, en forme de pyramide tronquée.

3. Luminaire selon la revendication 2,
**caractérisé en ce que**
le premier plan (E1) est incliné par rapport au plan de fixation (19), de préférence selon un angle d'environ 20°.

4. Luminaire selon l'une des revendications précédentes,
**caractérisé en ce que**
le guide de lumière (4) présente des structures d'éjection de lumière conçues de telle façon que la première lumière sorte au moins partiellement du guide de lumière (4) par la surface plane de rayonnement.

5. Luminaire selon l'une des revendications précédentes,
**caractérisé en ce que**
le guide de lumière (4) augmente d'épaisseur, depuis la première zone de bord (61) jusqu'à la deuxième zone de bord (62), de préférence de manière continue.

6. Luminaire selon la revendication 5,
**caractérisé en ce que**
l'épaisseur du guide de lumière (4) est environ quatre fois plus importante à proximité de la surface d'entrée de lumière (41) qu'à proximité de la zone terminale opposée (42).

7. Luminaire selon l'une des revendications précédentes,
**caractérisé en ce que**
le guide de lumière (4) se compose d'un matériau synthétique, notamment de PMMA ou PC,
des particules diffusant la lumière étant de préférence prévues dans le guide de lumière (4).

8. Luminaire selon l'une des revendications précédentes,
**caractérisé en ce que**
l'émission de lumière par ledit luminaire présente une répartition asymétrique de la lumière, cette émission de lumière rayonnant dans la direction opposée à un plan de fixation (19) du luminaire, de préférence selon un angle de 135 degrés par rapport au plan de fixation (19).
